# EUROPÄISCHE PATENTSCHRIFT

(11) **EP 3 856 541 B1**
(45) Veröffentlichungstag und Bekanntmachung des Hinweises auf die Patenterteilung: **26.10.2022**
(21) Anmeldenummer: 19739601.3
(22) Anmeldetag: 12.07.2019
(51) Int. Cl.: B60C 99/00, H05B 3/34

(54) **REIFENWÄRMER**
TYRE HEATER
COUVERTURE CHAUFFANTE POUR PNEUS

(30) Priorität: 27.09.2018 DE 102018123938
(43) Veröffentlichungstag der Anmeldung: 04.08.2021
(73) Patentinhaber: LTP Litschka GmbH & Co. KG, 42859 Remscheid (DE)
(72) Erfinder: LITSCHKA, Stefan Bruno, 42859 Remscheid (DE)
(74) Vertreter: Kluin, Jörg-Eden
(86) Internationale Anmeldenummer: PCT/EP2019/068815
(87) Internationale Veröffentlichungsnummer: WO 2020/064165

(56) Entgegenhaltungen:
- DE-A1- 4 019 447
- DE-A1- 10 218 133
- JP-A- S60 104 404

## Beschreibung

Die Erfindung betrifft einen Reifenwärmer zum Anlegen an einen Reifen insbesondere eines Motorrades.

Reifenwärmer sind bereits bekannt. Sie dienen beispielsweise im Renneinsatz dazu, einen Reifen beispielsweise eines Motorrades bereits im Stand desselben auf eine Betriebstemperatur zu erwärmen, bei der die gewünschte Haftung des Motorradreifens auf der Fahrbahn gewährleistet ist.

Bei der Verwendung eines solchen Reifenwärmers besteht das Risiko, dass der Reifenwärmer von dem Reifen entfernt und das Motorrad in Betrieb genommen wird, bevor die gewünschte Betriebstemperatur erreicht ist. Ursachen hierfür können beispielsweise technische Defekte wie Kabelbruch, Ausfall der Heizeinrichtung des Reifenwärmers, Auslösen einer elektrischen Sicherung, oder ein Stromausfall sein. Aufgrund der vor Erreichen der Betriebstemperatur noch reduzierten Haftung des Reifens besteht ein erhöhtes Sturzrisiko.

Aus der gattungsbildenden Druckschrift DE 40 19 447 A1 ist ein Reifenwärmer bekannt, welcher mittels einer Glimmlampe ein Aufheizen des Reifenwärmers anzeigt. Die Druckschrift DE 102 18 133 A1 offenbart ebenfalls einen Reifenwärmer.

Der Erfindung liegt die Aufgabe zugrunde, einen Reifenwärmer zu schaffen mit welchem das Sturzrisiko durch eine Anzeige des Aufheizens reduziert wird.

Diese Aufgabe wird durch den in Anspruch 1 wiedergegebene Reifenwärmer gelöst.

Der erfindungsgemäße Reifenwärmer dient zum Anlegen an einen Reifen beispielsweise eines Motorrades, um diesen vor der Fahrt zu erwärmen. Vor Beginn der Fahrt wird der Reifenwärmer entfernt, möglichst erst dann, wenn der Reifen des Motorrades die Betriebstemperatur, bei welcher eine ausreichende Haftung auf der Fahrbahn gewährleistet ist, erreicht hat.

Der erfindungsgemäße Reifenwärmer weist eine innere Fläche auf, die bei bestimmungsgemäß angelegtem Reifenwärmer auf dem Reifen aufliegt, insbesondere auf seiner Lauffläche. Ferner weist der erfindungsgemäße Reifenwärmer eine äußere Fläche auf, die bei bestimmungsgemäß angelegtem Reifenwärmer von dem Reifen fortweist.

Bei dem erfindungsgemäßen Reifenwärmer sind zwischen der inneren Fläche und der äußeren Fläche Heizmittel, die vorzugsweise elektrisch betrieben werden, vorgesehen, mit denen die Temperatur zumindest von Bereichen des Reifenwärmers zwischen einer Bereitschaftstemperatur und der Betriebstemperatur veränderbar ist. Die Bereitschaftstemperatur ist regelmäßig niedriger als die Betriebstemperatur. Die Bereitschaftstemperatur kann die Temperatur sein, die der Reifen bei nicht in Betrieb genommenen Heizmitteln annimmt, d. h. die Umgebungstemperatur. Es kann sich bei der Bereitschaftstemperatur auch um eine zwischen der Umgebungstemperatur und der Betriebstemperatur liegende Temperatur handeln, die ein manuelles Anlegen des Reifenwärmers an den Reifen noch zulässt, ohne dass die Gefahr besteht, dass sich ein Benutzer Verbrennungen zuzieht. Liegt die Bereitschaftstemperatur über der Umgebungstemperatur, so kann die zum Erreichen der Betriebstemperatur benötigte Zeit reduziert werden.

Der erfindungsgemäße Reifenwärmer umfasst des weiteren Temperarturanzeigemittel, die durch Betrachtung der äußeren Fläche des Reifens optisch wahrnehmbar sind und ein Aufheizen des Reifenwärmers, insbesondere ein Aufheizen des Reifenwärmers über die Bereitschaftstemperatur, anzeigen. Bei einer Ausführungsform können die Temperaturanzeigemittel ein Erreichen der Betriebstemperatur des Reifenwärmers anzeigen. Aufgrund dieser Maßnahme erkennt ein Benutzer des Reifenwärmers - meist der Fahrer des Motorrades - selbst durch flüchtige Betrachtung desselben und aus der Ferne, ob der Reifenwärmer funktioniert. Bei der erwähnten Ausführungsform erkennt der Benutzer, ob die gewünschte Betriebstemperatur des Reifenwärmers erreicht ist oder nicht.

Demgegenüber umfassen herkömmliche Reifenwärmer bestenfalls schlecht erkennbare Kontrollleuchten, die beispielsweise die Betriebszustände "heizen" und "Betriebstemperatur erreicht" anzeigen.

Die Temperaturanzeigemittel sind vorzugsweise zwischen der inneren Fläche und der äußeren Fläche angeordnet derart, dass sie durch Betrachten der äußeren Fläche optisch wahrnehmbar sind.

Besonders bevorzugt sind die Temperaturanzeigemittel in einer die äußere Fläche bildenden Deckmaterialschicht angeordnet.

Die Deckmaterialschicht kann hierzu eine Schicht eines thermochromogenen Polymers umfassen oder aus dieser bestehen.

Die Temperaturanzeigemittel können beispielsweise derart ausgebildet sein, dass sie bei Erreichen einer höheren als der Bereitschaftstemperatur ihre Farbe ändern, beispielsweise von schwarz zu rot. Unter "ihre Farbe ändern" ist auch ein Übergang von transparent zu nicht transparent oder umgekehrt zu verstehen.

Erfindungsgemäß umfassen die Temperaturanzeigemittel mindestens eine thermochrome Substanz, beispielsweise in Form thermochromer Pigmente.

Umfassen die Temperaturanzeigemittel mehrere unterschiedliche thermochrome Substanzen, so können diese derart ausgewählt sein, dass die Umgebungstemperatur, eine über dieser liegende Bereitschaftstemperatur sowie die Betriebstemperatur jeweils in unterschiedlichen Farben angezeigt werden.

Besonders bevorzugt ist ein Ausführungsbeispiel eines erfindungsgemäßen Reifenwärmers, bei welcher die Deckmaterialschicht transparente Partikel mit inneren Hohlräumen umfasst. Die inneren Hohlräume umfassen vorzugsweise die Temperaturanzeigemittel. Die Deckschicht umfasst vorzugsweise eine transparente, ausgehärtete Klebstoffmasse, der die die Temperaturanzeigemittel enthaltenden transparenten Partikel beigemischt sind. Die so gebildete Deckschicht ist einerseits auf einfache Weise herstellbar, andererseits ist durch das Vorsehen der Temperaturanzeigemittel, insbesondere der thermochromen Substanzen, in den inneren Hohlräumen der transparenten Partikel sichergestellt, dass die Temperaturanzeigemittel nicht mit der Klebstoffmasse direkt in Berührung gelangen, was zu chemischen Reaktionen führen könnte. Darüber hinaus sind die Temperaturanzeigemittel innerhalb der transparenten Partikel vor äußeren mechanischen Einflüssen geschützt.

Durch das Vorsehen der Temperaturanzeigemittel in einer die äußere Fläche bildenden Deckmaterialschicht ist es möglich, die Grundkonzeption bereits bekannter Reifenwärmer beizubehalten und lediglich die Deckmaterialschicht zu ergänzen, um einen erfindungsgemäßen Reifenwärmer zu erhalten.

Bei einer bevorzugten Ausführungsform umfasst die Deckmaterialschicht eine Gewebelage, auf die die Klebstoffmasse aufgebracht ist.

Überraschenderweise hat sich gezeigt, dass die Partikel, die Temperaturanzeigemittel, insbesondere thermochrome Substanzen, in inneren Hohlräumen enthalten, für die Beimischung in einer Deckmaterialschicht besonders gut geeignet sind, wenn sie in zumindest einer Raumrichtung eine Größe von 2 bis 7 µm aufweisen.

Besonders bevorzugt da besonders gut bei mischbar weisen die Partikel etwa eine Kugelform mit einem Durchmesser zwischen 2 und 7 µm auf. Besonders unempfindlich gegen mechanische Belastungen und resistent gegen chemische Reaktionen sind die Partikel dann, wenn sie ein Glasmaterial umfassen oder aus diesem bestehen.

Besonders bevorzugt weist die thermochrome Substanz Silbertetraiodomercurat (II) auf. Durch Verwendung dieser thermochromen Substanz kann bewirkt werden, dass erwärmte Bereich des Reifenwärmers von ursprünglich Rot in auffälliger Weise in Gelb ändern.

Besonders bevorzugt beträgt das Gewichtsverhältnis zwischen dem Klebstoff und den Partikeln 10:5 bis 7. Aufgrund dieser Maßnahme wird ein besonders intensiver Farbwechsel sichergestellt.

Die Klebstoffmasse umfasst vorzugsweise Zwei-Komponenten Epoxy-Klebstoff, da dieser zur Ausbildung einer dauerhaft transparenten Schicht besonders gut geeignet ist.

Besonders bevorzugt ist es, wenn sich die Temperaturanzeigemittel zumindest über 50 % des Flächeninhalts der äußeren Fläche des Reifenwärmers erstrecken. Es hat sich gezeigt, dass in diesem Falle ein Farbwechsel der Temperaturanzeigemittel regelmäßig nicht übersehbar ist.

Die Betriebstemperatur liegt regelmäßig über etwa 35° C. Daher ist es des Weiteren bevorzugt, die Temperaturanzeigemittel derart auszubilden, dass sie das Erreichen einer Temperatur von etwa 35° C anzeigen.

Nachfolgend sollen drei Ausführungsbeispiele beschrieben werden, die das Erreichen unterschiedlicher Temperaturen anzeigen.

Bei dem ersten Ausführungsbeispiel haben die kugelförmigen Partikel einen Durchmesser etwa 2 µm. Sie bestehen aus transparentem Glasmaterial. Bei der thermochromen Substanz handelt es sich um Silbertetraiodomercurat (II). Das Gewichtsverhältnis zwischen der Klebemasse und den Partikeln beträgt 10:5. Bei der Klebemasse handelt es sich um einen Zwei-Komponenten Epoxy-Klebstoff, in den die Partikel im viskosen Zustand der Klebemasse gleichmäßig beigemischt sind und welche im viskosen Zustand auf die Oberfläche der Gewebelage aufgebracht worden ist.

Versuche haben gezeigt, dass bei dieser Ausführungsform die Deckmaterialschicht ihre Farbe innerhalb von zwei Sekunden ändern kann, wenn der Reifenwärmer 40° C erreicht.

Das zweite Ausführungsbeispiel eines erfindungsgemäßen Reifenwärmers unterscheidet sich von dem ersten Ausführungsbeispiel darin, dass die kugelförmigen Partikel einen Durchmesser von etwa 7 µm aufweisen und das Gewichtsverhältnis zwischen der Klebemasse und der kugelförmigen Partikel 10:7 beträgt. Bei diesem Ausführungsbeispiel kann die Deckschicht ihre Farbe innerhalb von zwei Sekunden ändern, wenn der Reifenwärmer 30° C erreicht.

Ein drittes Ausführungsbeispiel unterscheidet sich von dem ersten und zweiten Ausführungsbeispiel darin, dass die kugelförmigen Partikel einen Durchmesser von etwa 5 µm aufweisen und das Gewichtsverhältnis der Klebemasse zu den kugelförmigen Partikeln 10:6 beträgt. Die Deckmaterialschicht dieses Reifenwärmers kann ihre Farbe innerhalb von zwei Sekunden ändern, wenn der Reifenwärmer 35° C erreicht.

Die Erfindung soll nun anhand eines in den rein schematischen Zeichnungen dargestellten Ausführungsbeispiels näher erläutert werden. Es zeigen:
- Fig. 1: eine perspektivische Ansicht der äußeren Fläche eines nicht am Reifen angelegten Reifenwärmers;
- Fig. 2: - ausschnittsweise - einen Querschnitt durch die Deckschicht dieses Reifenwärmers gemäß Schnittlinie II-II;
- Fig. 3: eine perspektivische Darstellung eines Teils eines Motorrades mit an dem Hinterreifen angelegtem Reifenwärmer;
- Fig. 4: eine perspektivische Ansicht der inneren Fläche eines nicht am Reifen angelegten Reifenwärmers, mit zur besseren Darstellbarkeit aus dem Reifenwärmer entnommen gezeichneten Regelungseinrichtungen und Anlageerkennungsmitteln sowie
- Fig. 5: stark vergrößert einen Partikel, der eine thermochrome Substanz aufweist.

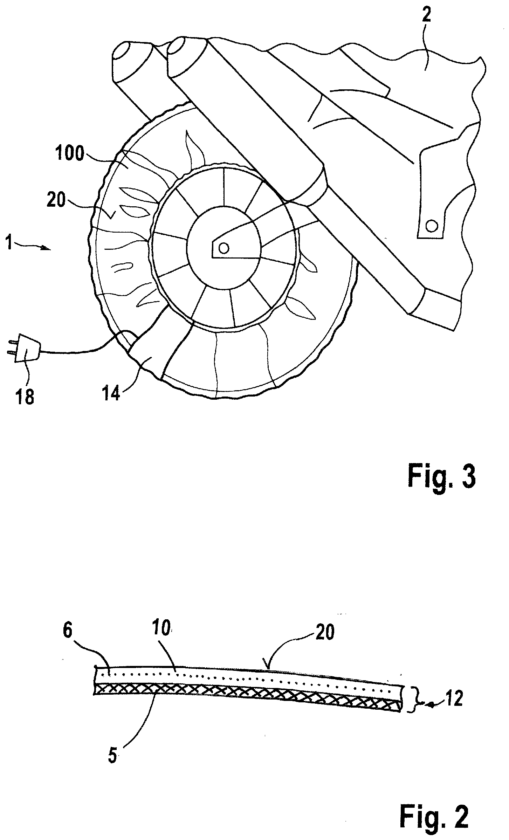

Das als Ganzes mit 100 bezeichnete, gezeigte Ausführungsbeispiel des erfindungsgemäßen Reifenwärmers dient, wie etwa Fig. 3 zeigt, dazu, an einen Reifen 1 eines Motorrades 2 angelegt zu werden, um diesen Reifen vor der Fahrt zu erwärmen.

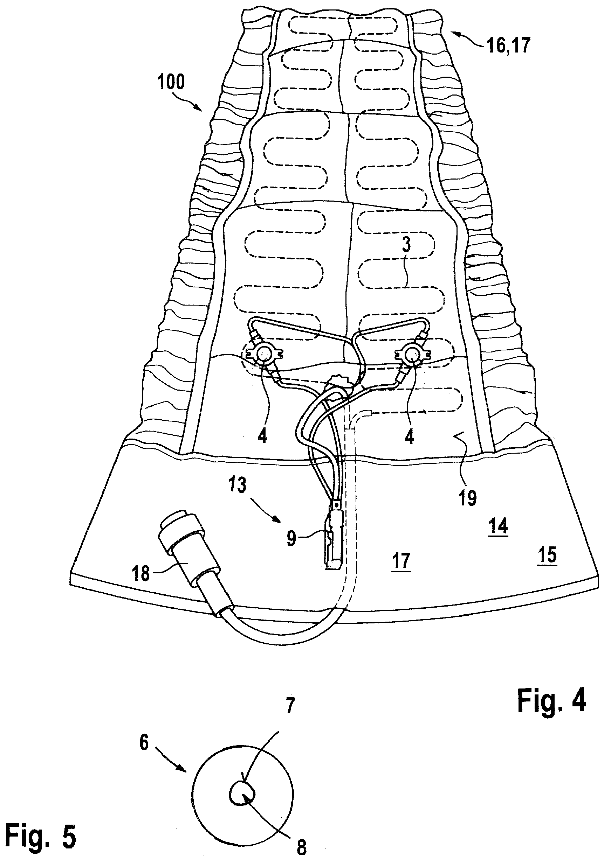

Der Reifenwärmer 100 umfasst elektrische Heizmittel 3, die in Fig. 4 als strichgepunktete, geschwenkte Linie symbolisiert sind. Sie sind in einem Stromkreis 13 eingeschaltet, der mittels eines Steckers 18 an ein Stromnetz anschließbar ist.

Der Reifenwärmer 100 kann eine Einrichtung 4 zum Steuern oder Regel der Heizmittel 3 umfassen.

Der Reifenwärmer 100 umfasst eine innere Fläche 19, die bei angelegtem Reifenwärmer 100 auf dem Reifen 1 aufliegt und eine äußere Fläche 20, die bei angelegtem Reifenwärmer 100 von dem Reifen 1 fortweist.

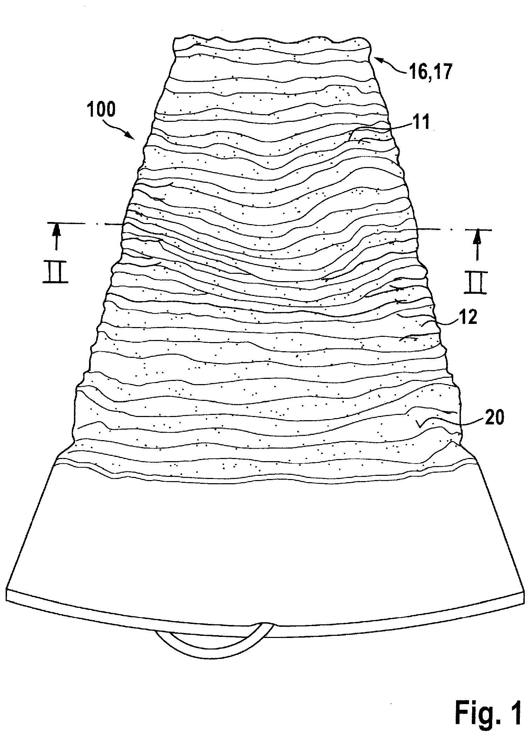

Zwischen der inneren Fläche 19 und der äußeren Fläche 20 des Reifenwärmers sind, wie in Fig. 1 punktiert dargestellt ist, Temperaturanzeigemittel 11 vorgesehen, die mindestens eine thermochrome Substanz umfassen können. Die Temperaturanzeigemittel 11 sind derart ausgebildet, dass sie bei Erreichen der Betriebstemperatur des Reifenwärmers ihre Farbe wechseln. Damit dieser Farbwechsel bei Betrachtung der äußeren Fläche optisch wahrnehmbar ist, sind sie bei dem dargestellten Ausführungsbeispiel in einer die äußere Fläche 20 bildenden Deckmaterialschicht 12 vorgesehen.

Bei dem dargestellten Ausführungsbeispiel umfassen die Temperaturanzeigemittel 11 transparente, etwa kugelförmige Partikel 6 mit einem Durchmesser zwischen 2 und 7 µm. Die Partikel 6 weisen jeweils einen Hohlraum 7 auf, in dem mindestens eine thermochrome Substanz enthalten ist. Bei dem vorliegenden Ausführungsbeispiel handelt es sich bei dieser thermochromen Substanz um den Stoff Silbertetraiodomercurat (II).

Die Deckmaterialschicht 12 umfasst eine ausreagierte Zwei-Komponentenmasse 10 auf Kunstharz-, beispielsweise Epoxidharzbasis, der im noch viskosen Zustand die Partikel 6 vorzugsweise unter Bildung einer homogenen Mischung beigegeben worden sind. Die Zwei-Komponentenmasse, in dieser Druckschrift auch als Klebstoffmasse bezeichnet, ist auf eine einen Teil der Deckmaterialschicht bildenden Gewebelage aufgebracht.

Die Zwei-Komponentenmasse 10 ist im ausreagierten Zustand ebenfalls transparent.

Wie in Fig. 4 erkennbar ist, umfasst das dargestellte Ausführungsbeispiel des Reifenwärmers 100 Anlageerkennungsmittel, die erkennen, ob der Reifenwärmer 100 an dem Reifen 1 angelegt ist oder nicht. Diese Anlageerkennungsmittel sind im gezeigten Ausführungsbeispiel als Tastschalter 9 ausgeführt. Er ist lediglich der besseren Darstellbarkeit halber in Fig. 3 aus dem Reifenwärmer 100 entnommen dargestellt. Tatsächlich ist er zwischen der inneren Fläche 19 und der äußeren Fläche 20 angeordnet.

Der Tastschalter 9 bewirkt bei an dem Reifen 1 angelegtem Reifenwärmer 100 das Schließen eines elektrischen Stromkreises 13 und ein Aufheizen der Heizmittel 3 auf eine Betriebstemperatur. Der Aufheizvorgang wird durch den Farbwechsel der Temperaturanzeigemittel 11 von außen optisch erkennbar. Der Tastschalter 9 bewirkt eine Reduzierung der Heizleistung oder ein Abschalten der Heizmittel 3, wenn der Reifenwärmer 100 nicht an dem Reifen 1 angelegt ist. Beim Unterschreiten einer Temperatur erfolgt ein umgekehrter Farbwechsel der Temperaturanzeigemittel. Es ist denkbar, die Temperaturanzeigemittel beispielsweise durch Vorsehen einer weiteren, thermochromen Substanz derart auszubilden, dass bestimmte Temperaturübergänge, beispielsweise das Unterschreiten einer Bereitschaftstemperatur, oder das Erreichen der Betriebstemperatur durch einen weiteren Farbwechsel angezeigt wird.

Wird der Reifenwärmer 100 von dem Reifen 1 entnommen, so schaltet der Wechselschalter 9 selbsttätig zurück in seine Ruhestellung und öffnet den Stromkreis 13. Eine Überhitzung des Reifenwärmers 100 wird somit verhindert.

Wie des Weiteren in Fig. 4 erkennbar ist, weist der Reifenwärmer 100 Befestigungsmittel 14 zum Befestigen des Reifenwärmers an dem Reifen 1 auf, die einen ersten Befestigungsbereich 15 umfassen, der über einen zweiten Befestigungsbereich 16 des Reifenwärmers angeordnet wird. Die beiden Befestigungsbereiche werden mit den beiden Teilen eines Klettverschlusses 17 aneinander befestigt.

### Bezuaszeichenliste:

- 100: Reifenwärmer
- 1: Reifen
- 2: Motorrad
- 3: Heizmittel
- 4: Einrichtung zum Steuern oder Regeln
- 5: Gewebelage
- 6: Partikel
- 7: Hohlraum
- 8: thermochrome Substanz
- 9: Schalter
- 10: Klebstoffmasse
- 11: Temperaturanzeigemittel
- 12: Deckmaterialschicht
- 13: elektrischer Stromkreis
- 14: Befestigungsmittel
- 15: erster Befestigungsbereich
- 16: zweiter Befestigungsbereich
- 17: Klettverschluss
- 18: Stecker
- 19: innere Fläche
- 20: äußere Fläche

## Patentansprüche

1. Reifenwärmer (100) zum Anlegen an einen Reifen (1) eines Motorrades, um diesen vor der Fahrt zu erwärmen,
mit einer inneren Fläche (19), die bei bestimmungsgemäß angelegtem Reifenwärmer (100) auf dem Reifen (1) aufliegt,
mit einer äußeren Fläche (20), die bei bestimmungsgemäß angelegtem Reifenwärmer (100) von dem Reifen (1) fortweist,
mit zwischen der inneren Fläche (19) und der äußeren Fläche (20) angeordneten, vorzugsweise elektrisch betriebenen Heizmitteln (3), mit denen die Temperatur zumindest von Bereichen des Reifenwärmers (100) zwischen einer Bereitschaftstemperatur und einer Betriebstemperatur veränderbar ist,
und mit durch Betrachtung der äußeren Fläche (20) optisch wahrnehmbaren Temperaturanzeigemitteln (11), die ein Aufheizen des Reifenwärmers anzeigen **dadurch gekennzeichnet, dass** die Temperaturanzeigemittel (11) mindestens eine thermochrome Substanz umfassen.

2. Reifenwärmer nach Anspruch 1, **dadurch gekennzeichnet, dass** die Temperarturanzeigemittel (11) zwischen der inneren Fläche (19) und der äußeren Fläche (20) durch Betrachtung der äußeren Fläche (20) optisch wahrnehmbar angeordnet sind.

3. Reifenwärmer nach Anspruch 1 oder 2, **dadurch gekennzeichnet, dass** die Temperaturanzeigemittel (11) in eine die äußere Fläche (20) bildenden Deckmaterialschicht (12) angeordnet sind.

4. Reifenwärmer nach einem der vorhergehenden Ansprüche, **dadurch gekennzeichnet, dass** die thermochrome Substanz thermochrome Pigmente umfasst.

5. Reifenwärmer nach einem der vorhergehenden Ansprüche 3 bis 4, **dadurch gekennzeichnet, dass** die Deckmaterialschicht (12) transparente Partikel (6) mit inneren Hohlräumen (7) umfasst.

6. Reifenwärmer nach Anspruch 5, **dadurch gekennzeichnet, dass** die Temperaturanzeigemittel (11) in den inneren Hohlräumen (7) vorgesehen sind.

7. Reifenwärmer nach Anspruch 5 oder 6, **dadurch gekennzeichnet, dass** die Partikel (6) zumindest in einer Raumrichtung eine Größe von 2 bis 7 µm aufweisen.

8. Reifenwärmer nach einem der Ansprüche 5 bis 7, **dadurch gekennzeichnet, dass** die Partikel (6) etwa eine Kugelform aufweisen.

9. Reifenwärmer nach einem der Ansprüche 5 bis 8, **dadurch gekennzeichnet, dass** die Partikel (6) ein Glasmaterial umfassen oder aus diesem bestehen.

10. Reifenwärmer nach einem der vorhergehenden Ansprüche, **dadurch gekennzeichnet, dass** die thermochrome Substanz (8) Silbertetraidomercurat (II) umfasst.

11. Reifenwärmer nach einem der Ansprüche 3 bis 10, **dadurch gekennzeichnet, dass** die Deckmaterialschicht (12) eine transparente, ausgehärtete Klebstoffmasse (10) umfasst, wobei die Klebstoffmasse auf eine Gewebelage (5) aufgebracht ist.

12. Reifenwärmer nach Anspruch11, **dadurch gekennzeichnet, dass** das Gewichtsverhältnis zwischen der Klebstoffmasse (10) und den Partikeln (6) 10:7 bis 10:5 beträgt.

13. Reifenwärmer nach Anspruch 12, **dadurch gekennzeichnet, dass** die Partikel (6) der Klebstoffmasse (10) beigemischt sind.

14. Reifenwärmer nach einem der Ansprüche 11 bis 13, **dadurch gekennzeichnet, dass** die Klebstoffmasse einen Zwei-Komponenten Epoxy-Klebstoff umfasst.

## Claims

1. Tire warmer (100) to be placed on a tire (1) of a motorcycle in order to warm said tire before a journey, having an inner surface (19) which rests on the tire (1) when the tire warmer (100) is placed as intended, having an outer surface (20) which faces away from the tire (1) when the tire warmer (100) is placed as intended, having preferably electrically operated heating means (3) which are arranged between the inner surface (19) and the outer surface (20) and by means of which the temperature of at least regions of the tire warmer (100) can be changed between a standby temperature and an operating temperature, and having temperature display means (11) which can be perceived optically by observing the outer surface (20) and which display that the tire warmer is heating up, **characterized in that** the temperature display means (11) comprise at least one thermochromic substance.

2. Tire warmer according to claim 1, **characterized in that** the temperature display means (11) are arranged between the inner surface (19) and the outer surface (20) so that they can be perceived optically by observing the outer surface (20).

3. Tire warmer according to either claim 1 or claim 2, **characterized in that** the temperature display means (11) are arranged in a cover material layer (12) which forms the outer surface (20).

4. Tire warmer according to any of the preceding claims, **characterized in that** the thermochromic substance comprises thermochromic pigments.

5. Tire warmer according to either claim 3 or claim 4, **characterized in that** the cover material layer (12) comprises transparent particles (6) having inner cavities (7).

6. Tire warmer according to claim 5, **characterized in that** the temperature display means (11) are provided in the inner cavities (7).

7. Tire warmer according to either claim 5 or claim 6, **characterized in that** the particles (6) have a size of from 2 to 7 µm in at least one spatial direction.

8. Tire warmer according to any of claims 5 to 7, **characterized in that** the particles (6) have an approximately spherical shape.

9. Tire warmer according to any of claims 5 to 8, **characterized in that** the particles (6) comprise or consist of a glass material.

10. Tire warmer according to any of the preceding claims, **characterized in that** the thermochromic substance (8) comprises silver tetraiodomercurate (II).

11. Tire warmer according to any of claims 3 to 10, **characterized in that** the cover material layer (12) comprises a transparent, cured adhesive compound (10), the adhesive compound being applied to a woven fabric layer (5).

12. Tire warmer according to claim 11, **characterized in that** the weight ratio of the adhesive compound (10) to the particles (6) is from 10:7 to 10:5.

13. Tire warmer according to claim 12, **characterized in that** the particles (6) are admixed with the adhesive compound (10).

14. Tire warmer according to any of claims 11 to 13, **characterized in that** the adhesive compound comprises a two-component epoxy adhesive.

## Revendications

1. Réchauffeur de pneumatique (100) destiné à être mis en place sur un pneumatique (1) d'une motocyclette afin de le réchauffer avant le trajet, comportant une surface intérieure (19) qui repose sur le pneumatique (1) lorsque le réchauffeur de pneumatique (100) est mis en place comme prévu, comportant une surface extérieure (20) faisant saillie en s'éloignant du pneumatique (1) lorsque le réchauffeur de pneumatique (100) est mis en place comme prévu, comportant des moyens de chauffage (3), de préférence entraînés électriquement, disposés entre la surface intérieure (19) et la surface extérieure (20) et avec lesquels la température d'au moins certaines zones du réchauffeur de pneumatique (100) peut être modifiée entre une température d'attente et une température de fonctionnement, et comportant des moyens d'affichage de température (11) perceptibles optiquement par observation de la surface extérieure (20) et indiquant un chauffage du réchauffeur de pneumatique, **caractérisé en ce que** les moyens d'affichage de température (11) comprennent au moins une substance thermochromique.

2. Réchauffeur de pneumatique selon la revendication 1,
**caractérisé en ce que** les moyens d'affichage de température (11) sont disposés entre la surface intérieure (19) et la surface extérieure (20) de manière à être perceptibles optiquement par observation de la surface extérieure (20).

3. Réchauffeur de pneumatique selon la revendication 1 ou 2,
**caractérisé en ce que** les moyens d'affichage de température (11) sont disposés dans une couche de matériau de recouvrement (12) formant la surface extérieure (20).

4. Réchauffeur de pneumatique selon l'une des revendications précédentes, **caractérisé en ce que** la substance thermochromique comprend des pigments thermochromiques.

5. Réchauffeur de pneumatique selon l'une des revendications 3 à 4, **caractérisé en ce que** la couche de matériau de recouvrement (12) comprend des particules (6) transparentes comportant des cavités intérieures (7).

6. Réchauffeur de pneumatique selon la revendication 5,
**caractérisé en ce que** les moyens d'affichage de température (11) sont prévus dans les cavités intérieures (7).

7. Réchauffeur de pneumatique selon la revendication 5 ou 6,
**caractérisé en ce que** les particules (6) présentent une taille de 2 à 7 µm au moins dans une direction spatiale.

8. Réchauffeur de pneumatique selon l'une des revendications 5 à 7, **caractérisé en ce que** les particules (6) présentent approximativement une forme sphérique.

9. Réchauffeur de pneumatique selon l'une des revendications 5 à 8, **caractérisé en ce que** les particules (6) comprennent ou sont constituées d'un matériau de verre.

10. Réchauffeur de pneumatique selon l'une des revendications précédentes, **caractérisé en ce que** la substance thermochromique (8) comprend du tétraiodomercurate d'argent (II).

11. Réchauffeur de pneumatique selon l'une des revendications 3 à 10, **caractérisé en ce que** la couche de matériau de recouvrement (12) comprend une composition de matière adhésive (10) transparente durcie, la composition de matière adhésive étant appliquée sur une couche de tissu (5).

12. Réchauffeur de pneumatique selon la revendication 11,
**caractérisé en ce que** le rapport pondéral entre la composition de matière adhésive (10) et les particules (6) est de 10:7 à 10:5.

13. Réchauffeur de pneumatique selon la revendication 12,
**caractérisé en ce que** les particules (6) sont mélangées à la composition de matière adhésive (10).

14. Réchauffeur de pneumatique selon l'une des revendications 11 à 13, **caractérisé en ce que** la composition de matière adhésive comprend une matière adhésive époxy à deux composants.
